# EUROPÄISCHE PATENTSCHRIFT

(11) **EP 2 386 493 B1**
(45) Veröffentlichungstag und Bekanntmachung des Hinweises auf die Patenterteilung: **06.09.2017**
(21) Anmeldenummer: 10162623.2
(22) Anmeldetag: 12.05.2010
(51) Int. Cl.: B65D 75/56, B65D 75/58, B65D 75/00, A41B 9/02, A41B 9/04

(54) **Standbodenbeutel aus einer heißsiegelfähigen Kunststofffolie**
Standing pouch made of a heat sealable plastic film
Sac à fond plat tenant debout composé d'une feuille plastique pouvant être scellée à chaud

(43) Veröffentlichungstag der Anmeldung: 16.11.2011
(73) Patentinhaber: Mondi Halle GmbH, 33790 Halle (DE)
(72) Erfinder: Brauer, Jochen, 49393 Lohne (DE); Kruse, Alfons, 49413 Dinklage (DE)
(74) Vertreter: Lorenz, Bernd Ingo Thaddeus

(56) Entgegenhaltungen:
- EP-A1- 1 798 157
- WO-A1-02/085729
- WO-A1-03/047993
- WO-A1-2008/145164
- DE-U1- 7 833 490
- JP-A- 2002 012 234
- JP-B2- 3 516 031
- US-A1- 2003 077 006
- US-A1- 2004 109 616

## Beschreibung

Die Erfindung betrifft einen Standbodenbeutel aus einer heißsiegelfähigen Kunststofffolie, der zur Verpackung von flüssigen oder pastösen Produkten verwendet wird, mit zwei Seitenwänden, die durch eine Kopfsiegelnaht und an ihren Längskanten durch Längssiegelnähte verbunden sind, mit einem nach innen gefalteten Folienboden und mit einem Wiederverschluss in Form eines wiederverschließbaren Ausgießelementes, welches im Bereich der die Seitenwände verbindenden Kopfsiegelnaht angeordnet ist und einen Schraubverschluss aufweist. Ein Standbodenbeutel mit den vorstehend beschriebenen Merkmalen zur Verpackung von flüssigen oder pastösen Produkten ist aus EP-A-1 798 157 bekannt.

Die Kunststofffolie kann eine mehrschichtige Coextrusionsfolie oder eine Verbundfolie sein, die an der Beutelinnenseite eine heißsiegelfähige Polymerschicht aufweist. Der Standbodenbeutel kann aus einer Folienbahn gefertigt sein, so dass der Folienboden aus derselben Folie besteht wie die Seitenwände. Der erfindungsgemäße Standbodenbeutel soll aber auch Ausführungen umfassen, die einen aus einer separaten Folie gefertigten Folienboden aufweisen. Die möglichen Anwendungsgebiete reichen von der Verpackung von Getränken, Flüssigkonzentraten, flüssigen Reinigungsmitteln, Waschmitteln bis hin zu viskosen Körperpflegemitteln.

Standbodenbeutel mit den beschriebenen Merkmalen sind standfest, zeichnen sich durch ein geringes Gewicht aus und können nach ihrer Entleerung wieder zusammengefaltet sowie platzsparend entsorgt werden. Aufgrund ihrer geringen Formstabilität lassen sich die flexiblen Beutelverpackungen beim Ausgießen des Füllgutes allerdings schlechter handhaben. Es ist schwierig, die Beutelverpackungen beim Ausgießen oder Ausschütten des Füllgutes zu halten, da die Beutelwände nachgiebig sind und sich die Form sowie das Beutelvolumen während der Füllgutentnahme ständig ändert. Insbesondere mit zunehmender Verpackungsgröße erfordert eine dosierte Füllgutentnahme einiges Geschick.

Vor diesem Hintergrund liegt der Erfindung die Aufgabe zugrunde, die Handhabung eines zu Verpackungszwecken eingesetzten Standbodenbeutels zu verbessern. Insbesondere besteht die Aufgabe darin, einen Standbodenbeutel anzugeben, der beim Ausgießen oder Ausschütten des Füllgutes sicher gefasst werden kann und eine dosierte Abgabe von flüssigen oder pastösen Produkten ermöglicht.

Gegenstand der Erfindung und Lösung dieser Aufgabe ist ein Standbodenbeutel aus einer heißsiegelfähigen Kunststofffolie, der zur Verpackung von flüssigen oder pastösen Produkten verwendet wird.

Erfindungsgemäß ist etwa mittig an einer der Seitenwände ein Folientragegriff befestigt. Durch die erfindungsgemäße Anordnung des Folientragegriffs an der Seitenwand des Standbodenbeutels wird erreicht, dass die Verpackung beim Ausgießen des Füllgutes stets so gehalten wird, dass die mit einem Wiederverschluss versehene Entnahmeöffnung zwangsläufig an der tiefsten Stelle liegt. Das erlaubt eine dosierte Füllgutabgabe sowie eine unproblematische Restentleerung. Während des Ausgießvorganges ändert sich das Volumen und die Form der Verpackung. Stets kann der erfindungsgemäße Standbodenbeutel aber mit einer Hand sicher gehalten und so ausgerichtet werden, dass das in dem Standbodenbeutel enthaltene Füllgut der Entnahmeöffnung zufließt. Dabei kann der Folientragegriff eine Handgriffschlaufe aufweisen, die entweder parallel oder quer zu den Längskanten des Beutels ausgerichtet ist.

Der Folientragegriff liegt vorzugsweise innerhalb der Außenkontur des Standbodenbeutels und stört daher nicht beim Transport der flachgelegten und zunächst ungefüllten Beutel. Der erfindungsgemäße Folientragegriff lässt es ferner zu, dass die Verpackung nach ihrer vollständigen Entleerung wieder zusammengefaltet und platzsparend entsorgt werden kann.

Es bestehen mehrere Möglichkeiten der konstruktiven Ausgestaltung des Folientragegriffs. Die Auswahl richtet sich nach der Beanspruchung und ist abhängig von der Größe des Standbodenbeutels bzw. dem Füllgewicht für das er ausgelegt ist. Eine erste Ausführungsform sieht vor, dass der Folientragegriff an der beutelinnenseitigen Fläche einer Seitenwand befestigt und durch eine Grifföffnung in der Seitenwand zugänglich ist. Die Befestigung erfolgt vorzugsweise durch Heißsiegeln, wobei allerdings auch eine Klebeverbindung nicht ausgeschlossen sein soll. Die Grifföffnung ist durch ein Folienblatt verschlossen, welches an der Rückseite des Folientragegriffs angeordnet und mit der Beutelinnenfläche verbunden ist. Vorzugsweise ist die Grifföffnung durch einen heraustrennbaren Folienabschnitt der Seitenwand oder des Folienbodens verschlossen, so dass der Folientragegriff vollständig innerhalb der Kontur des Standbodenbeutels angeordnet ist. Die Standbodenbeutel, welche eine Beutelfertigungsanlage zunächst als flachgelegte, ungefüllte Beutel verlassen, weisen glatte Oberflächen auf und lassen sich infolgedessen gut stapeln und transportieren. Auch der Transport von gefüllten Standbodenbeuteln, beispielsweise in Kartons oder anderen Umverpackungen, wird nicht beeinträchtigt, wenn der Folientragegriff hinter einer glatten Außenfläche des Beutels versteckt angeordnet ist.

Wenn der Folientragegriff für große Beanspruchungen ausgelegt werden muss, ist die folgende Ausgestaltung vorteilhaft. Der Folientragegriff weist in diesem Fall eine aus einem Folienstreifen bestehende Schlaufe auf, die ein Trägerblatt umgreift. Das an beiden Seiten der Schlaufe überstehende Trägerblatt ist an dem rückseitigen Folienblatt und/oder an der Beutelinnenfläche vorzugsweise durch Heißsiegeln befestigt. Die beschriebene Tragegriffkonstruktion hat den Vorteil, dass die beim Tragen des Standbodenbeutels wirkende Kraft zunächst auf das Trägerblatt und damit auf eine große Fläche verteilt wird. Die gleichmäßige Kraftverteilung ermöglicht die Übertragung großer Traglasten. Bei kleineren Standbodenbeuteln, die für ein geringeres Füllgewicht ausgelegt sind, kann der Folientragegriff auch als einfacher Folienstreifen ausgebildet sein. Zur Befestigung eines solchen einfacheren Folientragegriffes bietet es sich an, die Enden durch Öffnungen in der Beutelhülle mit einem Folienblatt zu verbinden, welches an der Beutelinnenseite befestigt ist und die Öffnung verschließt. Gemäß einer weiteren möglichen Ausgestaltung des Folientragegriffes ist an der Beutelinnenfläche ein Verstärkungsblatt angeordnet und mit der Innenfläche verbunden, wobei eine Griffschlaufe aus einem randseitig von zwei Schlitzen begrenzten Abschnitt der Beutelfolie und des Verstärkungsblattes gebildet ist. Zusätzlich ist ein Verschlussblatt vorgesehen, mit dem eine durch die Griffschlaufe gebildete Öffnung an der Beutelinnenseite abgedeckt ist. Um eine erhöhte Tragkraft zu erreichen, können die die Griffschlaufe definierenden Schlitze jeweils zwischen zwei das Verstärkungsblatt mit der Beutelinnenfläche verbindenden Siegelnähten oder innerhalb einer das Verstärkungsblatt mit der Beutelinnenfläche verbindenden Klebefläche angeordnet sein.

Der Wiederverschluss besteht aus einem wiederverschließbaren Ausgießelement bestehen, welches im Bereich der die Seitenwände verbindenden Kopfsiegelnaht angeordnet ist. Das Ausgießelement ermöglicht eine genaue Dosierung der Abgabemenge von flüssigem oder pastösem Füllgut und weist einen Schraubverschluss auf, mit dem ein dichter und zuverlässiger Wiederverschluss erreicht werden kann.

Die Seitenwände und der Folienboden können durch Falten einer flächigen Materialbahn geformt werden. Die Faltkanten zwischen dem Folienboden und den Folienflächen der Seitenwände werden zweckmäßig durch Siegelnähte, sogenannte Blindsiegelnähte, verstärkt. Alternativ besteht die Möglichkeit, den Folienboden und die Folienflächen der Seitenwände aus unterschiedlichen Folien zu fertigen und durch Siegelnähte miteinander zu verbinden.

Als Kunststofffolie zur Fertigung des Standbodenbeutels bieten sich eine Vielzahl von Polymeren und Materialkombinationen an. Insbesondere kann der Standbodenbeutel aus transparenten Polymeren gefertigt oder mit Fenstern ausgestattet sein, um den Füllstand erkennen zu können. Vorteilhafte Materialkombinationen sind beispielsweise PET/PE, OPP/PE, PET/OPA/PP, OPP/PP und PE/PE. Zusätzlich können transparente Barriereschichten durch SiOx beschichtete oder durch coextrudierte Barrierepolymerschichten, z. B. EVOH, vorgesehen sein. Als Kunststofffolien können auch Verbundmaterialien zur Anwendung kommen, die eine oder mehrere Schichten aus biologisch abbaubaren und nachwachsenden Rohstoffen aufweisen. Als Beispiele sind Cellulose/ Stärke-Polyester- und OPLA/PLA-Polyester-Compounds zu nennen. Für den erfindungsgemäßen Standbodenbeutel kommen insbesondere aber auch Verbundmaterialien in Betracht, die eine metallische Zwischenschicht oder eine Zwischenschicht aus einem metallisierten Polymer umfassen. Vorteilhafte Materialkombinationen sind PET/Alu/PE, PET/Alu/PP sowie OPP (metallisiert)/PP.

Die Dicke der Kunststofffolie hängt maßgeblich ab von der Beutelgröße und dem Füllgewicht, für das der Standbodenbeutel ausgelegt ist. Ein Standbodenbeutel für Flüssigkeiten mit einem Füllvolumen von etwa 2,5 Liter kann beispielsweise aus einer Kunststofffolie gefertigt werden, die einen dreischichtigen Aufbau mit einer 12 µm dicken Außenschicht aus PET, einer 12 µm dicken Zwischenschicht aus PET sowie einer 100 µm dicken Polyethylenschicht an der Beutelinnenseite aufweist. Zur Erhöhung der Fallfestigkeit können schließlich auch Gewebe im Folienverbund eingesetzt werden. Eine solche Kunststofffolie weist beispielsweise einen Schichtenverbund aus PE/Gewebe/PE auf.

Im Folgenden werden einzelne Aspekte der Erfindung anhand von Ausführungsbeispielen erläutert. Die beanspruchte Merkmalskombination ist in keiner Figur vollständig dargestellt. Es zeigen schematisch:
- Fig. 1: eine Seitenansicht eines flachgelegten Standbodenbeutels mit einem an einer Seitenwand befestigten Folientragegriff,
- Fig. 2: eine Ausführungsvariante des in Fig. 1 dargestellten Standbodenbeutels,
- Fig. 3: eine Seitenansicht eines flachgelegten Standbodenbeutels mit einem an dem Folienboden befestigten Folientragegriff,
- Fig. 4: eine Ausführungsvariante des in Fig. 3 dargestellten Standbodenbeutels,
- Fig. 5: eine Schnittdarstellung durch den Bodenbereich des in Fig. 4 dargestellten Standbodenbeutels,
- Fig. 6: eine Einzelteilzeichnung des Folientragegriffs, insbesondere zur Verwendung an einem Standbodenbeutel gemäß den Fig. 1 und 2,
- Fig. 7: die Handhabung eines in Fig. 1 dargestellten Standbodenbeutels beim Ausgießen von flüssigem oder pastösem Füllgut und
- Fig. 8: eine weitere Ausführungsvariante eines Folientragegriffs, der an einer Seitenwand oder am Folienboden eines Standbodenbeutels angeordnet ist.

Der in den Figuren dargestellte Standbodenbeutel besteht aus einer heißsiegelfähigen, vorzugsweise mehrschichtigen Kunststofffolie und dient der Verpackung von pulverartigen, körnigen, pastösen oder flüssigen Produkten. Der Standbeutel wird als flachgelegter Beutel gefertigt und in Abfüllanlagen mit dem Füllgut befüllt. Er besteht in seinem grundsätzlichen Aufbau aus zwei Seitenwänden 1, die durch eine

Kopfsiegelnaht 2 und an ihren Längskanten jeweils durch eine Längssiegelnaht 3 verbunden sind, einem nach innen gefalteten Folienboden 4 und einem Wiederverschluss 5. Die Auswahl des Wiederverschlusses 5 richtet sich nach dem Verpackungsgut und kann z. B. für flüssige und pastöse Produkte aus einem wiederverschließbaren Ausgießelement 6 oder für pulverförmige und körnige Produkte aus einem Zipper- oder Sliderverschluss 7 bestehen. Der Standbodenbeutel kann aus einer Folienbahn durch Falten gefertigt werden. In diesem Fall bestehen der Folienboden 4 und die Seitenwände 1 aus derselben Folie. Allerdings ist es auch möglich, den Folienboden 4 und die Seitenwände 1 aus unterschiedlichen Folien zu fertigen und durch Siegelnähte miteinander zu verbinden.

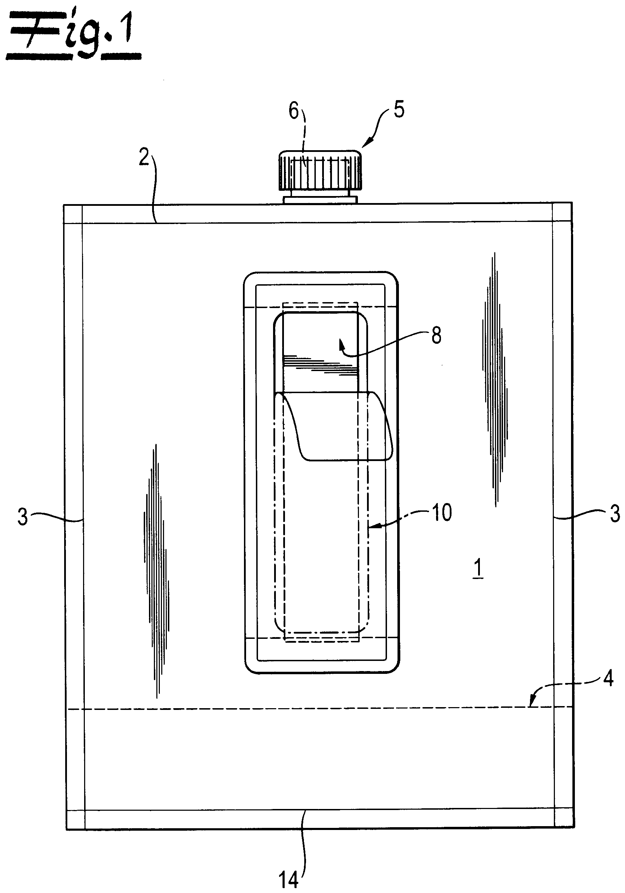

Bei dem in Fig. 1 dargestellten Standbodenbeutel ist als Wiederverschluss 5 ein wiederverschließbares Ausgießelement 6 vorgesehen, welches im Bereich der die Seitenwände 1 verbindenden Kopfsiegelnaht 2 angeordnet ist. An einer Seitenwand ist ein Folientragegriff 8 befestigt, der den in Fig. 6 dargestellten Aufbau aufweist. Der Folientragegriff 8 liegt innerhalb der Außenkontur des Standbodenbeutels. Er ist an der beutelinnenseitigen Fläche der Seitenwand 1 befestigt und durch eine Grifföffnung in der Seitenwand zugänglich. Die Grifföffnung ist durch ein Folienblatt 9 verschlossen, welches an der Rückseite des Folientragegriffs 8 angeordnet und mit der Beutelinnenfläche verbunden ist. Der Darstellung in Fig. 1 ist zu entnehmen, dass die Grifföffnung durch Heraustrennen eines Folienabschnitts 10 der Seitenwand 1 gebildet wird.

Die in Fig. 6 dargestellte Einzelteilzeichnung des Folientragegriffes 8 zeigt, dass der Folientragegriff 8 eine aus einem Foliensteifen bestehende Schlaufe 11 aufweist, die ein Trägerblatt 12 umgreift. Das Trägerblatt 12 steht an beiden Seiten der Schlaufe 11 über und ist an den überstehenden Enden durch eine Siegelung an dem rückseitigen Folienblatt 9 befestigt. Es kann zusätzlich oder alternativ auch unmittelbar an der Beutelinnenfläche befestigt werden.

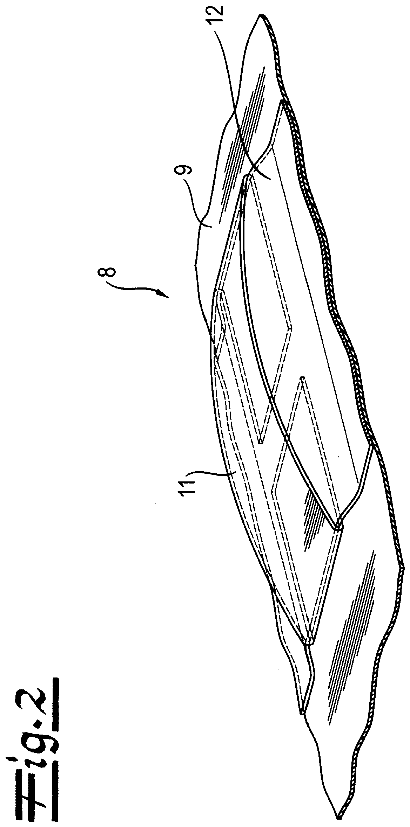

Der in Fig. 2 dargestellte Standbodenbeutel weist als Wiederverschluss 5 einen Zipperverschluss 7 auf. Dieser besteht aus zwei miteinander lösbar verbundenen Wiederverschlussstreifen 13, die unterhalb der Kopfsiegelnaht 2 an der Innenfläche der Seitenwände 1 befestigt sind und sich über die gesamte Breite der Seitenwände 1 erstrecken. Die Kopfsiegelnaht 2 bildet einen Originalitätsverschluss. Zum erstmaligen Öffnen des Standbodenbeutels muss ein Beutelabschnitt oberhalb des Wiederverschlusses abgetrennt werden. Dadurch wird der Wiederverschluss 5 für den weiteren Gebrauch zugänglich. Die Verschlussstreifen 13 des Wiederverschlusses 5 sind durch manuellen Druck miteinander verrastbar. Zur leichteren Handhabung kann der Wiederverschluss auch mit einem Slider ausgestattet sein. Der in Fig. 2 dargestellte Standbodenbeutel eignet sich besonders für pulverförmiges, körniges oder stückiges Füllgut.

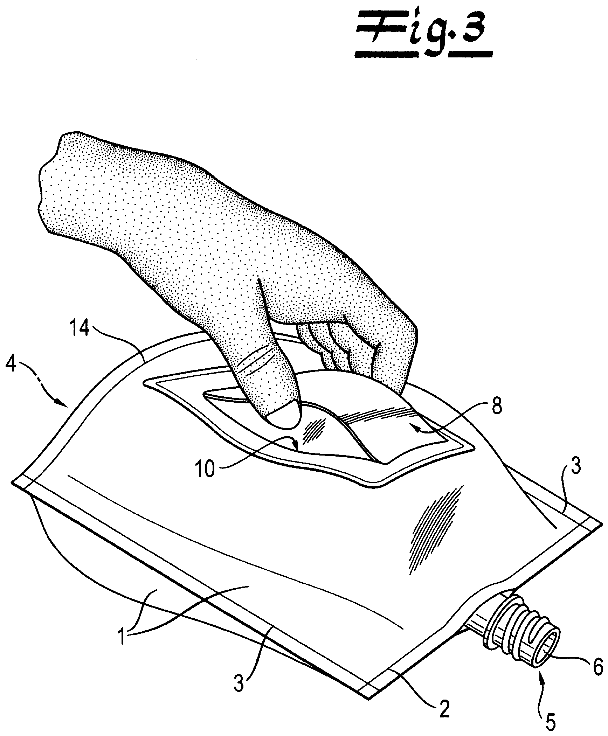

Im Ausführungsbeispiel der Fig. 3 ist ein Folientragegriff 8 an dem Folienboden 4 des Standbodenbeutels befestigt. Der Folientragegriff 8 besteht aus einem Folienstreifen, der an dem Folienboden 4 angeordnet und durch V-förmige Faltung zusammen mit dem Folienboden 4 im Raum zwischen den Seitenwänden 1 eingelegt ist. Die Enden des Folienstreifens sind durch Öffnungen in der Beutelhülle mit einem Folienblatt verschweißt, welches mit Siegelnähten an der Beutelinnenfläche befestigt ist und die Öffnungen verschließt. Im Ausführungsbeispiel ist als Wiederverschluss 5 ein wiederverschließbares Ausgießelement 6 vorgesehen. Es versteht sich, dass abhängig vom Verpackungsgut auch andere Wiederverschlüsse, insbesondere Zipper- und Sliderverschlüsse, eingesetzt werden können.

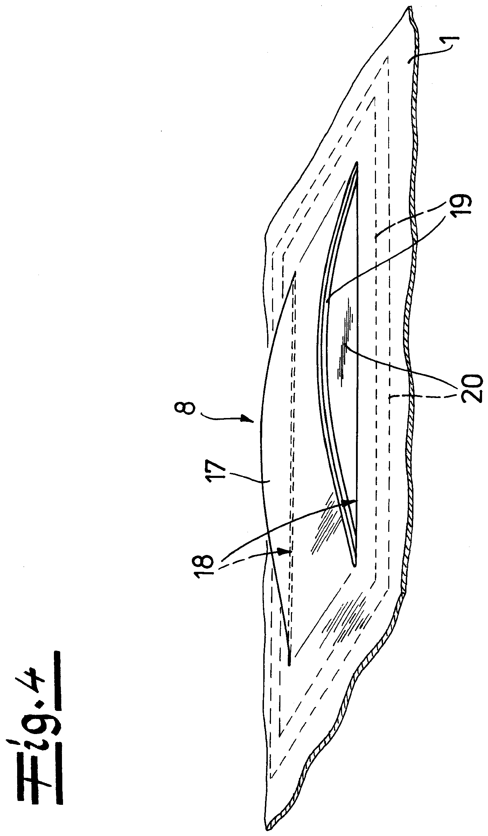

Die Fig. 4 und 5 zeigen einen ebenfalls am Folienboden 4 angeordneten Folientragegriff 8. Er besteht aus einem Folienstreifen 15, dessen Enden 16 in Siegelnähte 14 zwischen dem Folienboden 4 und den angrenzenden Seitenwänden 1 eingebunden sind. Als Wiederverschluss 5 ist ein wiederverschließbares Ausgießelement 6 vorgesehen. Alternativ können auch andere Wiederverschlüsse, insbesondere Zipper- und Sliderverschlüsse, verwendet werden.

In Fig. 8 ist eine weitere Ausführungsvariante eines Folientragegriffs 8 dargestellt, der an einer Folienwand 1 oder am Folienboden 4 angeordnet sein kann. Eine Griffschlaufe 17 des Folientragegriffs 8 ist aus einem randseitig von zwei Schlitzen 18 begrenzten Abschnitt der Beutelhülle und eines an der Beutelinnenfläche befestigten Verstärkungsblatts 19 gebildet. Das Verstärkungsblatt 19 ist beispielsweise mit einem flächigen Klebstoffauftrag an der Beutelinnenfläche angeklebt, wobei andere Arten der Befestigung allerdings nicht ausgeschlossen sein sollen. Die von der Griffschlaufe 17 gebildete Öffnung wird durch ein Verschlussblatt 20 an der Beutelinnenseite abgedeckt.

Im Rahmen der Erfindung liegt es, die dargestellten Maßnahmen miteinander zu kombinieren.

Die Seitenwände 1 und der Folienboden 4 können durch Falten einer flächigen Materialbahn geformt werden. Die Faltkanten zwischen dem Folienboden 4 und den Folienflächen der Seitenwände 1 sind durch Siegelnähte 14 verstärkt. Die Siegelnähte 14 bilden Blindsiegelnähte und haben keine Dichtungsfunktion. Sie dienen ausschließlich der Verstärkung bzw. Versteifung des Standbodenbeutels.

Die Fig. 7 zeigt die Handhabung eines als Verpackung für Flüssigkeiten oder viskose Produkte verwendeten Standbodenbeutels beim Ausgießen des Füllgutes. Durch die Anordnung des Folientragegriffes 8 an der Seitenwand 1 des Standbodenbeutels wird erreicht, dass die Verpackung beim Ausgießen des Füllgutes stets so gehalten wird, dass die Ausgießöffnung an der tiefsten Stelle liegt und eine vollständige Entleerung der Verpackung problemlos möglich ist. Im Ausführungsbeispiel ist das wiederverschließbare Ausgießelement 6 etwa in der Mitte der Kopfsiegelnaht 2 angeordnet. Auch außermittige Anordnungen sind ohne weiteres möglich. Ebenso kann der Folientragegriff 8 parallel oder quer zu den Längskanten des Beutels ausgerichtet werden.

## Patentansprüche

1. Standbodenbeutel aus einer heißsiegelfähigen Kunststofffolie, der zur Verpackung von flüssigen oder pastösen Produkten verwendet wird, mit
zwei Seitenwänden (1), die durch eine Kopfsiegelnaht (2) und an ihren Längskanten durch Längssiegelnähte (3) verbunden sind,
einem nach innen gefalteten Folienboden (4) und
einem wiederverschließbaren Ausgießelement (6),
wobei das Ausgießelement (6) in der Mitte der die Seitenwände verbindenden Kopfsiegelnaht (2) angeordnet ist und einen Schraubverschluss aufweist, **dadurch gekennzeichnet, dass** der Standbodenbeutel einen Folientragegriff aufweist, dass der Folientragegriff (8) etwa mittig an einer der Seitenwände (1) befestigt ist und eine Griffschlaufe (11, 17) aufweist, die parallel zu den Längssiegelnähten (3) der Längskanten ausgerichtet ist, und dass der Folientragegriff (8) entweder an der beutelinnenseitigen Fläche einer Seitenwand (1) befestigt und durch eine Grifföffnung in der Seitenwand (1) zugänglich ist und dass die Grifföffnung durch ein Folienblatt (9) verschlossen ist, welches an der Rückseite des Folientragegriffes (8) angeordnet und mit der Beutelinnenfläche verbunden ist.

2. Standbodenbeutel nach Anspruch 1, **dadurch gekennzeichnet, dass** der Folientragegrifif (8) innerhalb der Außenkontur des Beutels liegt.

3. Standbodenbeutel nach Anspruch 1 oder 2, **dadurch gekennzeichnet, dass**
die Grifföffnung durch einen heraustrennbaren Folienabschnitt (10) der Seitenwand (1) verschlossen ist.

4. Standbodenbeutel nach Anspruch 1 bis 3, **dadurch gekennzeichnet, dass** die Griffschlaufe (11) ein Trägerblatt (12) umgreift, und dass das an beiden Seiten der Griffschlaufe (11) überstehende Trägerblatt (12) an dem rückseitigen Folienblatt (9) und/oder an der Beutelinnenfläche befestigt ist.

## Claims

1. Stand-up pouch made of a heat-sealable plastic film which is used for packaging liquid or pasty products, comprising two side walls (1) which are connected by a head sealing seam (2) and at their longitudinal edges by longitudinal sealing seams (3), an inwardly folded film base (4) and a reclosable pouring element (6), wherein the pouring element (6) is arranged in the centre of the head sealing seam (2) connecting the side walls and has a screw closure, **characterized in that** the stand-up pouch has a film carrying handle, that the film carrying handle (8) is fastened approximately centrally to one of the side walls (1) and comprises a handle loop (11, 17) which is aligned parallel to the longitudinal sealing seams (3) of the longitudinal edges and that the film carrying handle (8) is either fastened to the pouch inner-side surface of a side wall (1) and is accessible through a handle opening in the side wall (1) and that the handle opening is closed by a film sheet (9) which is arranged on the rear side of the film carrying handle (8) and is connected to the pouch inner surface.

2. The stand-up pouch according to claim 1, **characterized in that** the film carrying handle (8) lies inside the outer contour of the pouch.

3. The stand-up pouch according to claim 1 or 2, **characterized in that** the handle opening is closed by a separable film section (10) of the side wall (1).

4. The stand-up pouch according to claim 1 to 3, **characterized in that** the handle loop (11) embraces a carrier sheet (12) and that the carrier sheet (12) protruding on both sides of the handle loop (11) is fastened to the rear-side film sheet (9) and/or to the pouch inner surface.

## Revendications

1. Sachet vertical fabriqué dans un film de matière plastique pouvant être thermocollé, qui est employé pour emballer des produits liquides ou pâteux, comprenant
deux parois latérales (1) qui sont reliées par un cordon de scellement supérieur (2) et par des cordons de scellement longitudinaux (3) sur leurs bords longitudinaux,
un fond de film (4) plié vers l'intérieur et
un élément verseur (6) refermable,
dans lequel l'élément verseur (6) est disposé au milieu du cordon de scellement supérieur (2) reliant les parois latérales et présente une fermeture vissée, **caractérisé en ce que** le sachet vertical présente une poignée de transport par film, que la poignée de transport par film (8) est fixée environ au centre d'une des parois latérales (1) et présente une boucle de poignée (11, 17) qui est alignée parallèlement aux cordons de scellement longitudinaux (3) des bords longitudinaux, et que la poignée de transport par film (8) est fixée soit sur la face côté intérieur du sachet d'une paroi latérale (1) et est accessible par une ouverture de poignée dans la paroi latérale (1) et que l'ouverture de poignée est fermée par un feuillet de film (9) qui est disposé au dos de la poignée de transport par film (8) et est relié avec la face intérieure du sachet.

2. Sachet vertical selon la revendication 1, **caractérisé en ce que** la poignée de transport par film (8) repose à l'intérieur du contour extérieur du sachet.

3. Sachet vertical selon la revendication 1 ou 2, **caractérisé en ce que** l'ouverture de poignée est fermée par un tronçon de film (10) séparable de la poignée latérale (1).

4. Sachet vertical selon la revendication 1 à 3, **caractérisé en ce que** la boucle de poignée (11) saisit un feuillet porteur (12) et que le feuillet porteur (12) dépassant sur les deux côtés de la boucle de poignée (11) est fixé sur le feuillet de film (9) arrière et/ou sur la face intérieure du sachet.
